(19) Europäisches Patentamt
European Patent Office
Office européen des brevets

(11) **EP 2 682 753 A1**

(12) **EUROPEAN PATENT APPLICATION**

(43) Date of publication:
**08.01.2014 Bulletin 2014/02**

(51) Int Cl.:
**G01N 35/00** *(2006.01)*    **G01N 35/10** *(2006.01)*

(21) Application number: **12167111.9**

(22) Date of filing: **08.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Roche Diagnostics GmbH**
  **68305 Mannheim (DE)**
  Designated Contracting States:
  **DE**
• **F. Hoffmann-La Roche AG**
  **4070 Basel (CH)**
  Designated Contracting States:
  **AL AT BE BG CH CY CZ DK EE ES FI FR GB GR HR HU IE IS IT LI LT LU LV MC MK MT NL NO PL PT RO RS SE SI SK SM TR**

• **Albert-Ludwigs-Universität Freiburg**
  **79085 Freiburg (DE)**

(72) Inventors:
• **Brückner, Thorsten**
  **69198 Schriesheim (DE)**
• **Koltay, Peter**
  **79117 Freiburg (DE)**
• **Oranth, Norbert**
  **79279 Voerstetten (DE)**
• **Spinke, Jürgen**
  **64653, Lorsch (DE)**
• **Tanguy, Laurent**
  **79106 Freiburg (DE)**

(74) Representative: **Richardt Patentanwälte GbR**
  **Wilhelmstraße 7**
  **65185 Wiesbaden (DE)**

(54) **Cartridge for Dispensing a Fluid Comprising a Reagent**

(57) The invention provides for a cartridge (100, 202, 202', 202", 400, 600, 800) for dispensing a fluid (104). The cartridge comprises a reservoir chamber (102) operable for receiving the fluid and for receiving a ventilation gas (106). The reservoir chamber comprises an inlet (114) for receiving the ventilation gas and an outlet (116) for dispensing the fluid. At least a portion (106) of the reservoir chamber is operable for being filled with the ventilation gas when in an operating position. The inlet is located in the portion operable for being filled with the ventilation gas. The fluid comprises a reagent. The cartridge further comprises a baffle means (108, 406, 602, 802) for restricting gas diffusion through the inlet. The reservoir chamber is operable for receiving the ventilation gas via the baffle means.

**Fig. 1**

## Description

### Field of the invention

The invention relates to the dispensing of fluids comprising a reagent, in particular cartridges for dispensing fluids.

### Background and related art

In medical laboratories, in vitro diagnostics are commonly performed on biological samples. Such tests may be performed manually using pipettes or maybe performed using an automatic analyzer. Automatic analyzers may automatically add reagents to the biological sample and may measure one or more physical properties of the biological sample during analysis. Automatic analyzers are known in the prior art. For example, European patent EP 1 959 257 A2 discloses an automatic analyzer including a reagent cassette holding mechanism for holding a plurality of reagent cassettes.

International patent application publication WO 2007/122387 discloses a cartridge for dispensing a reagent contained in a reagent reservoir. The cartridge comprises a reservoir which defines an enclosed gas space above the reagent. The cartridge further includes a gas vent that admits, in use, gas to the gas space. The vent outlet is located at the base of the reservoir. The vent is placed as low as possible in the reservoir so that the volume of reagent which may be displaced at a constant head pressure is increased. WO 2007/122387 further discloses that the generation of bubbles at the vent outlet causes fluctuations in the reservoir pressure, with the pressure increasing at the moment at which the bubble is formed at the vent outlet. This effect is reduced by minimizing the volume of the gas space above the reagent.

### Summary

The invention provides for a cartridge for dispending a fluid, an automatic analyzer, and a method of dispensing fluid with an automatic analyzer in the independent claims. Embodiments are given in the dependent claims.

In one aspect the invention provides for a cartridge for dispensing a fluid. The cartridge comprises a reservoir chamber for receiving the fluid. The reservoir chamber is also operable for receiving a ventilation gas. The reservoir chamber comprises an inlet for receiving the ventilation gas. There is also an outlet for dispensing a fluid from the reservoir. At least a portion of the reservoir chamber is operable for being filled with the ventilation gas when the cartridge is placed in an operating position. The inlet is located in the portion operable for being filled with the ventilation gas. The fluid comprises a reagent. The cartridge further comprises a baffle means for restricting gas diffusion through the inlet. The reservoir chamber receives the ventilation gas via the baffle means. Since the ventilation gas is provided directly to the gas within the reservoir, there is no bubble formation to cause variations of the pressure within the reservoir chamber. In this embodiment that baffle means provides the ventilation gas directly to the portion of the reservoir chamber operable for being filled with the ventilation gas. Embodiments of the invention may therefore have the advantage that there is always an equilibrium in pressure between outside of the cartridge and in the gas within the reservoir chamber. Embodiments of the invention may also have the advantage that the baffle means reduce the diffusion of gases into the reservoir chamber which may damage or degrade the fluid. The baffle means may also reduce evaporation of the fluid within the reservoir chamber because the diffusion of gas out of the reservoir chamber is also reduced.

A controller as used herein encompasses a device, machine, or apparatus for controlling the operation and/or function of one or more other devices. Examples of a controller may include, but are not limited to: a computer, a processor, an imbedded system or controller, a programmable logic controller, and a microcontroller. A 'computing device' or 'computer' as used herein encompasses to any device comprising a processor. A 'processor' as used herein encompasses an electronic component which is able to execute a program or machine executable instruction.

A 'computer-readable storage medium' as used herein encompasses any tangible storage medium which may store instructions which are executable by a processor of a computing device. The computer-readable storage medium may be referred to as a computer-readable non-transitory storage medium.

'Computer memory' or 'memory' is an example of a computer-readable storage medium. Computer memory is any memory which is directly accessible to a processor or other controller. 'Computer storage' or 'storage' is an example of a computer-readable storage medium. Computer storage is any non-volatile computer-readable storage medium.

A 'user interface' as used herein is an interface which allows a user or operator to interact with a computer or computer system.

A 'hardware interface' as used herein encompasses a interface which enables a processor or other controller to interact with and/or control an external computing device and/or apparatus. A hardware interface may allow a processor to send control signals or instructions to an external computing device and/or apparatus.

In one aspect the invention provides for a cartridge for dispensing a fluid. The cartridge comprises a reservoir chamber operable for receiving a fluid and for receiving a ventilation gas. A ventilation gas as used herein encompasses a gas which is used to equalize the pressure outside of the reservoir chamber and inside the reservoir chamber when fluid is removed from the reservoir chamber. The reservoir chamber comprises an inlet for receiving the ventilation gas and an outlet for dispensing the fluid. At least a portion of the reservoir chamber is operable for being filled with the ventilation gas when in an operating position. The inlet is located in the portion operable for being filled with the ventilation gas. In other words: When the cartridge is in an operating position, ventilation gas is added to the reservoir chamber at a location where there is already ventilation gas or which is immediately filled with the ventilation gas. The fluid comprises a reagent. A reagent as used herein is a substance or compound that is added to a chemical system in order to bring about a chemical or biochemical reaction or added to see if a reaction occurs.

The cartridge further comprises a baffle means for restricting gas diffusion through the inlet. The reservoir chamber is operable for receiving the ventilation gas via the baffle means. A baffle means as used herein encompasses a structure which causes gas to follow a particular path in order to reach the inlet. The baffle means provides a means of restricting the diffusion of gas in and/or out of the inlet. As such the gas diffusion as used herein may refer to the diffusion of ventilation gas into the cartridge and/or gas already present in the reservoir chamber from diffusing out. This embodiment may be advantageous because it may preserve the lifetime of the reagent within the cartridge. For instance depending upon the reagent constituents of the ventilation gas may cause the reagent to lose effectiveness or to lose its chemical reactivity; also gas inside the reservoir chamber may contain vapors from the fluid. The baffle means restricts the diffusion of the fluid vapor out of the inlet also. This may help to prevent the concentration of a particular reagent from changing.

In some embodiments the cartridge may comprise a filling inlet for filling the fluid into the reservoir chamber.

In some embodiments the ventilation gas may be normal atmospheric air. In some embodiments the baffle means is open to the atmosphere.

In another embodiment the cartridge comprises a cap for sealing the inlet. The cartridge is operable for forming at least a portion of the baffle means when the cap is open. This embodiment may be beneficial because removal of the cap placing the cap into an operating position forms a portion of the baffle means.

In another embodiment the cartridge comprises threads for attaching the cap. The baffle means comprises a diffusion path formed in the threads. For example the diffusion path could be a tube molded into the threads or a channel cut or molded on a surface of the threads. This embodiment may be beneficial because it may provide a cost effective means of providing the baffle means and integrating it into an existing structure.

In another embodiment the diffusion path is a channel in the threads. The cartridge further comprises a cap restraint for limiting the opening of the cap a predetermined amount. For example the cap and a portion of the cartridge may each have tabs or blocks on them. When the cap is open say a quarter or a half or three quarters turn it may prevent the cap from turning any further. This embodiment may be beneficial because it may provide a means of opening the threads a predetermined amount so that the diffusion along the channel is predictable and consistent between different cartridges.

In another embodiment the baffle means is at least partially formed on an exterior surface of the cartridge. This embodiment may be beneficial because it may provide a contact means of integrating a baffle means into a cartridge.

In another embodiment the baffle means comprises a tube mounted on the exterior surface.

In another embodiment the baffle means is at least partially formed within the reservoir chamber. This embodiment may be beneficial because the baffle means may be added to an existing cartridge or a baffle means may be tailored to a specific fluid. For instance some fluids may need a baffle means which restricts diffusion greater than another one in order to preserve the reagent.

In another embodiment the baffle means comprises a tube located at least partially within the reservoir chamber. This embodiment may be beneficial because the amount of tube within the reservoir chamber may be easily adjusted during manufacture of the cartridge.

In another embodiment the tube has a length-to-diameter ratio of at least 2.

In another embodiment the tube has a length-to-diameter ratio of at least 100.

In another embodiment at least part of the cartridge is injected molded. The baffle means is formed at least partially by the part.

In another embodiment the baffle means comprises a gas filter. The gas filter may be beneficial because in some embodiments it may help to further reduce diffusion through the inlet. In some embodiments the gas filter may have micro-pores to only let gas through. In some embodiments the filter may be hydrophobic. In other embodiments the gas filter may be: porous forms of polytetrafluoroethylene (PTFE), carbon fibers, carbon fibers coated with PTFE, polymer fibers, or fluoropolymer fibers.

This embodiment may be beneficial also from the aspect that the gas filter may help to keep the fluid within the reservoir chamber.

In another embodiment the cartridge further comprises the fluid.

In another embodiment the fluid comprises a blood grouping reagent.

In another embodiment the fluid comprises a diluent.

In another embodiment the fluid comprises a solvent.

In another embodiment the fluid comprises a catalyst.

In another embodiment the fluid comprises an antibody.

In another embodiment the fluid comprises an enzyme.

In another embodiment the fluid comprises a recombinant protein.

In another embodiment the fluid comprises a virus isolate.

In another embodiment the fluid comprises a virus.

In another embodiment the fluid comprises a biological reagent.

In another embodiment the fluid comprises a protein.

In another embodiment the fluid comprises a salt.

In another embodiment the fluid comprises a detergent.

In another embodiment the fluid comprises a nucleic acid.

In another embodiment the fluid comprises an acid.

In another embodiment the fluid comprises a base.

In another embodiment the fluid comprises a dispersion. A dispersion as used herein encompasses particles or particulates suspended within the fluid.

In another embodiment the fluid may comprise latex particles.

In another embodiment the fluid may comprise nanoparticles.

In another embodiment the fluid may comprise magnetic particles.

In another embodiment the cartridge further comprises a dispenser for dispensing the fluid. The dispenser is operable for receiving the fluid from the outlet. In some embodiments the dispenser may be a microfluidic dispenser. In other embodiments the dispenser may be or comprise a nozzle. For instance the dispenser may be or comprise a straight tube or it may be or comprise a nozzle with one or more valves contained within it.

In another aspect the invention provides for an automatic analyzer for holding or receiving a cartridge according to an embodiment of the invention. The automatic analyzer comprises an actuator assembly operable for actuating the dispenser. The automatic analyzer further comprises a controller for controlling the operation of the actuator assembly.

The dispenser could be mechanically, pneumatically, magnetically, and/or electrically actuated. This is dependent upon the implementation and how the dispenser is constructed. In an embodiment the cartridge is in an operating position when installed into the automatic analyzer.

In another aspect the invention provides for a method of dispensing fluid with the automatic analyzer. The method comprises the step of providing a cartridge. The cartridge comprises a reservoir chamber. The reservoir chamber is filled with the fluid. The fluid comprises a reagent. The reservoir chamber comprises an inlet for receiving a ventilation gas and an outlet for dispensing the fluid. The cartridge further comprises a baffle means for restricting gas diffusion through the inlet. The cartridge further comprises a dispenser for dispensing the fluid. The method further comprises the step of installing the cartridge into an automatic analyzer in an operating position. The automatic analyzer comprises an actuator assembly for actuating the dispenser. The method further comprises the step of receiving the fluid from the outlet using the dispenser. The method further comprises the step of operating the actuator assembly to dispense the fluid. The method further comprises the step of receiving the ventilation gas via the baffle means at the inlet. The method further comprises the step of filling at least a portion of the reservoir chamber with the ventilation gas. The inlet is located in the portion operable for being filled with the ventilation gas.

In another embodiment the method further comprises the step of removing a seal from the baffle means to provide air as the ventilation gas.

**Brief description of the drawings**

In the following embodiments of the invention are explained in greater detail, by way of example only, making reference to the drawings in which:

Fig. 1 illustrates a cartridge 100 according to an embodiment of the invention;

Fig. 2 illustrates an automatic analyzer 200 according to an embodiment of the invention;

Fig. 3 shows a flow diagram which illustrates a method according to an embodiment of the invention;

Fig. 4 illustrates a cartridge according to a further embodiment of the invention;

Fig. 5 further illustrates the cartridge shown in Fig. 4;

Fig. 6 illustrates a cartridge according to a further embodiment of the invention;

Fig. 7 further illustrates the cartridge shown in Fig. 6 providing an view onto the exterior surface of the cartridge shown in Fig. 6;

Fig. 8 illustrates a cartridge according to a further embodiment of the invention;

Fig. 9 further illustrates the cartridge shown in Fig. 8; and

Fig. 10 illustrates a cartridge according to a further embodiment of the invention.

**Detailed Description**

Like numbered elements in these figures are either equivalent elements or perform the same function. Elements which have been discussed previously will not necessarily be discussed in later figures if the function is equivalent.

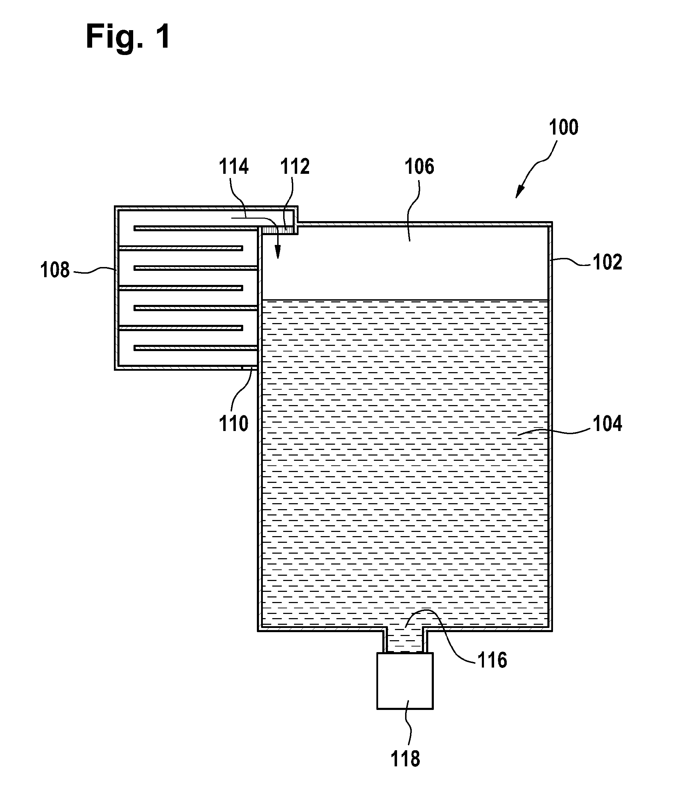

Fig. 1 illustrates a cartridge 100 according to an embodiment of the invention. The cartridge 100 comprises a reservoir chamber 102 for holding a fluid 104. The reservoir chamber 102 is only partially filled with the fluid 104. There is a region filled with gas 106 at the top of the reservoir chamber 102. Adjacent to the reservoir chamber 102 is a baffle means 108. The baffle means 108 in this example has a vent-to-atmosphere 110. Traveling through the baffle means there is an optional gas filter 112 which covers an inlet 114 to the reservoir chamber 102. The inlet 114 provides ventilation gas to the gas filled portion 106 of the reservoir chamber 102. The inlet 114 is attached to the baffle means 108. The fluid 104 exits the reservoir chamber 102 via an outlet 118. In this example there is an optional dispenser 118. The dispenser in this embodiment may either be a mechanism for pumping the fluid or it may simply be a nozzle or tube for dispensing the fluid.

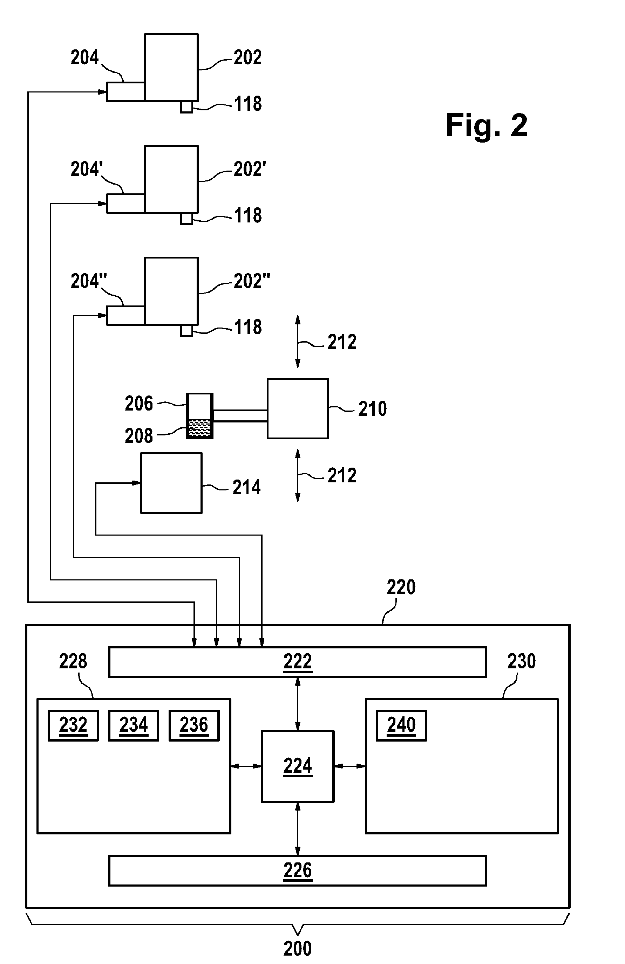

Fig. 2 illustrates an automatic analyzer 200 according to an embodiment of the invention. This automatic analyzer is shown as having three cartridges 202, 202' and 202". There is an actuator assembly 204 connected to cartridge 202. There is an actuator assembly 204' attached to cartridge 202'. There is an actuator assembly 204" attached to cartridge 202". The actuators 204, 204', 204" are for actuating the dispenser 118 of the cartridges 202, 202', 202". The automatic analyzer 200 is shown as having a relative movement means 210 which provides relative movement 212 between a sample holder 206 and the cartridges 202, 202' and 202". The sample holder 206 is shown as containing a biological sample 208. The cartridges 202, 202', 202" may be used to add one or more fluids to the biological sample 208. The automatic analyzer 200 may optionally comprise a measurement system 214. The measurement system may comprise one or more sensors for measuring a physical quantity or physical property of the biological sample 208. For example the measurement system 214 may comprise an NMR system, an optical transmission or reflectance measurement system, an electrochemical or optical sensor, a pH meter, a camera system or a chromatography system. The relative movement means 210 is also operable for moving the sample holder 206 to the measurement system 214.

The arrangement of the cartridges 202, 202', 202" and the measurement system 214 is representative. The measurement system 214 may be alternatively also a part of the sample holder 206. In some embodiments the sample holder 206 may remain in a fixed position and the cartridges 202, 202', 202" may move. The actuation systems 204, 204', 204" and the measurement system 214 are shown as being connected to a hardware interface 222 of a computer system 220. The computer system 220 functions as a controller for the automatic analyzer 200. The computer 220 is further shown as containing a processor 224 which is able to control the operation and function of the automatic analyzer 200 using the hardware interface 222. The processor 224 is shown as further being connected to a user interface 226, computer storage 228 and computer memory 230. The computer storage 228 is shown as containing an analysis request 232. The analysis request 232 contains a request to analyze the biological sample 208.

The computer storage 228 is shown as further containing sensor data 234 received from the measurement system 214. The computer storage 228 is shown as further containing an analysis result 236 which was determined using the sensor data 234. The computer memory 230 contains a control module 240. The control module 240 contains computer executable code which enables the processor 224 to control the operation and function of the automatic analyzer 200. For instance the control module 240 may use the analysis request 232 to generate commands to generate and send to the actuation systems 204, 204', 204", the measurement system 214 and the relative movement system 210. The control module 240 may also generate the analysis result 236 using the sensor data 234.

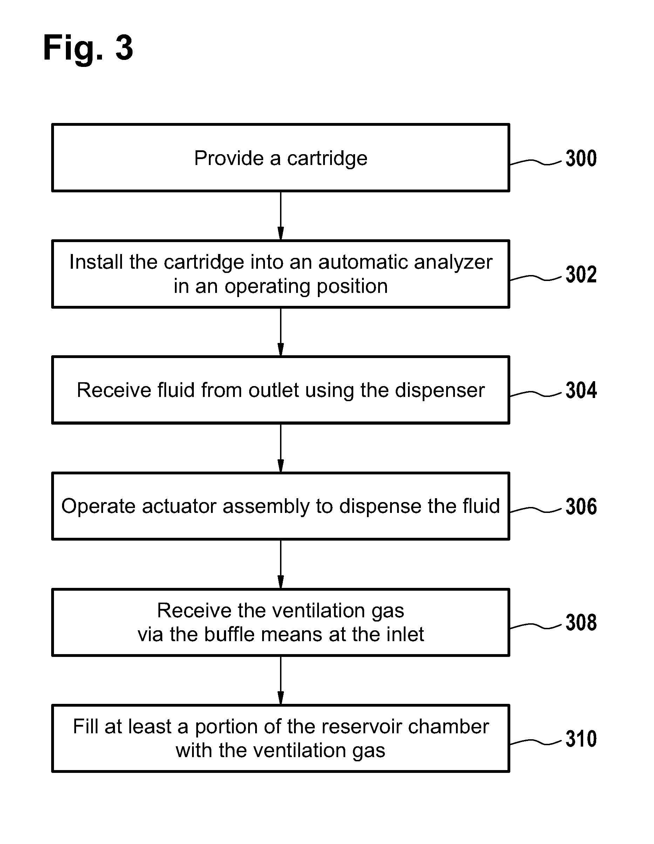

Fig. 3 shows a flow diagram which illustrates a method according to an embodiment of the invention. First in step 300 a cartridge is provided. Next in step 302 the cartridge is installed into an automatic analyzer and the cartridge is in an operating position. Next in step 304 fluid is dispense, i.e. received, from the outlet using the dispenser. Next in step 306 the actuator center is operated to dispense the fluid. Next in step 308 the ventilation gas is received via the baffle means at the inlet of the fluid reservoir. Finally in step 310 at least a portion of the reservoir chamber is filled with the ventilation gas.

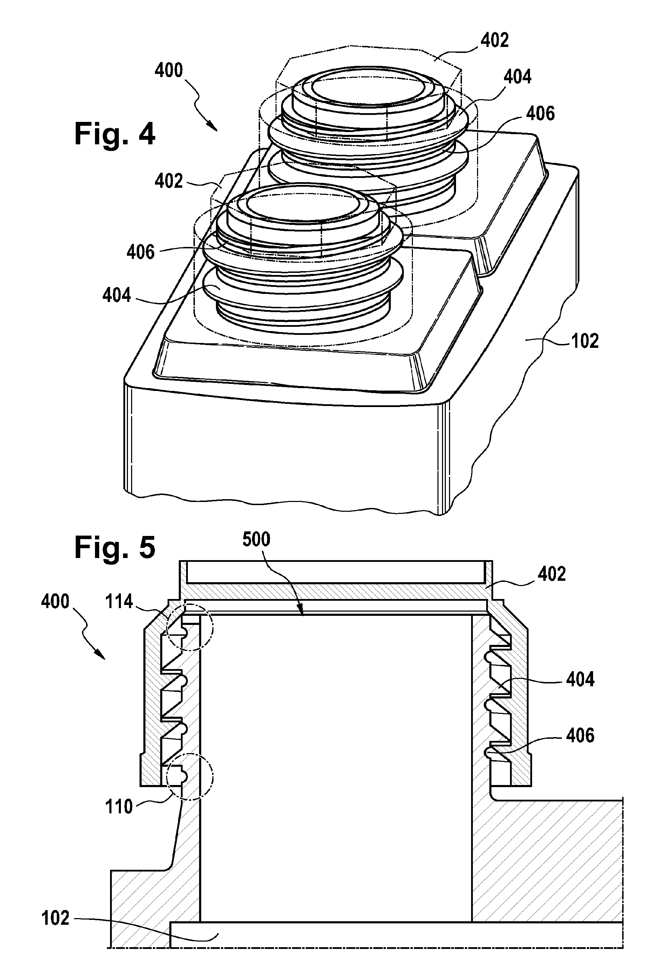

Figs. 4 and 5 show an alternative embodiment of a cartridge 400 according to the invention. In Figs. 4 and 5 two cartridges are integrated into a common housing.

This cartridge 400 design has a cap 402 that is secured by threads 404. The reservoir chamber 102 is sealed by the cap 402. There are channels 406 cut or molded into the threads 404. When the cap 402 is open slightly, as is shown in Fig. 5 the channel 406 forms a vent-to-atmosphere 110. At the top of the threads 404 the gap between the cap 402 and the threads 404 forms the inlet 114. A gas filter may be stretched across the opening of the inlet 114 in some embodiments. The position is marked 500 in Fig. 5. When the cap 402 is closed the reservoir chamber 102 is sealed and the inlet 114 is closed. When the cap 402 is opened gas is able to diffuse into the channel 406. The amount the cap 402 is open may be controlled by placing a stop on the cap 402 and a corresponding stop on the reservoir chamber 102 to prevent the cap 402 from being opened too far.

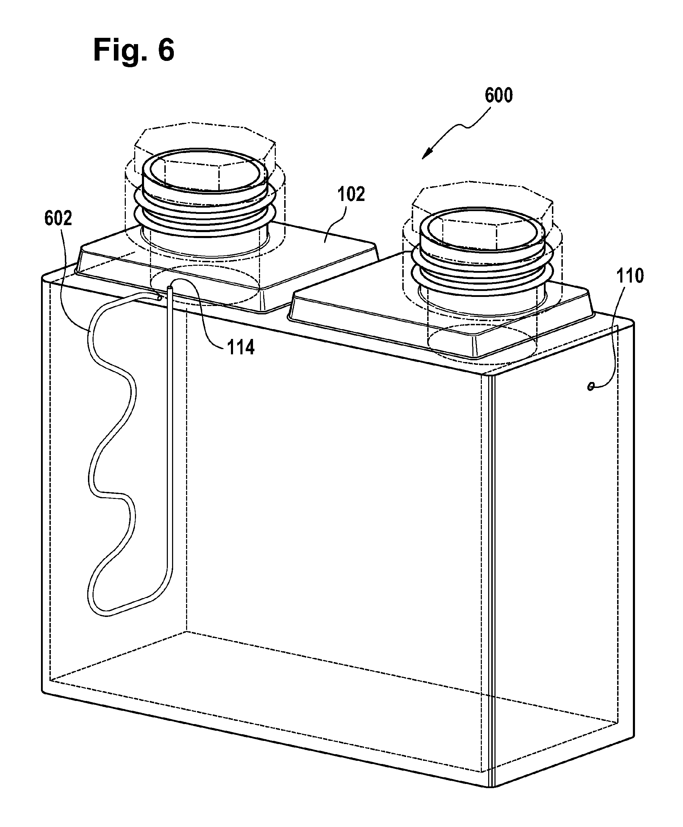

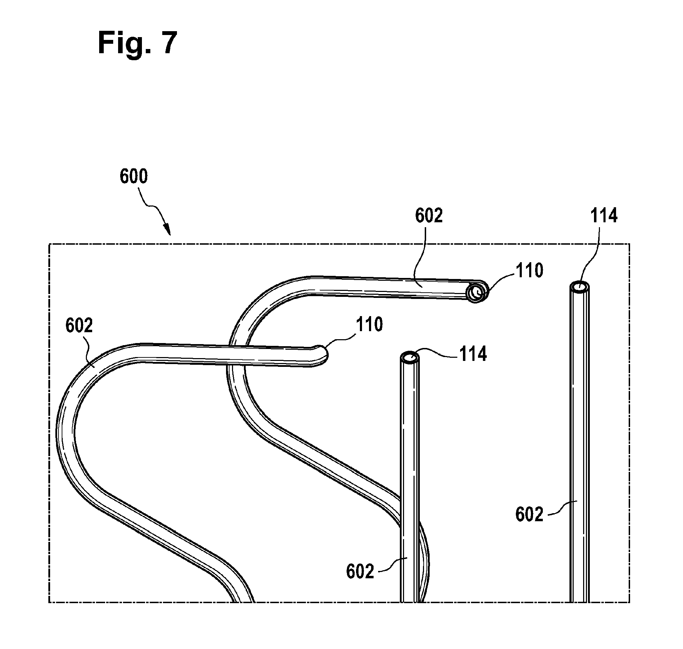

Figs. 6 and 7 illustrate a cartridge 600 according to a further embodiment of the invention. In Figs. 6 and 7 two cartridges are integrated into a common housing. In the embodiments shown in Figs. 6 and 7 a tube 602 that is either attached to the surface of the reservoir chamber 102 or is molded or partially molded into the reservoir chamber 102 is used. The tubes 602 have a vent-to-atmosphere 110 and follow an winding path on the outside of the cartridge 600. The tubes 602 are then connected to the inlet 114 of the reservoir chamber 102.

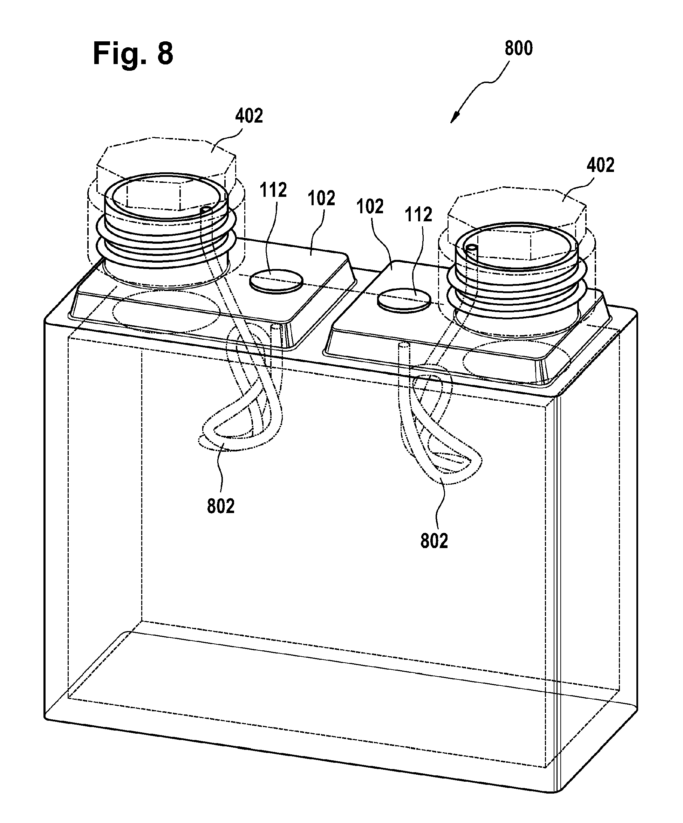

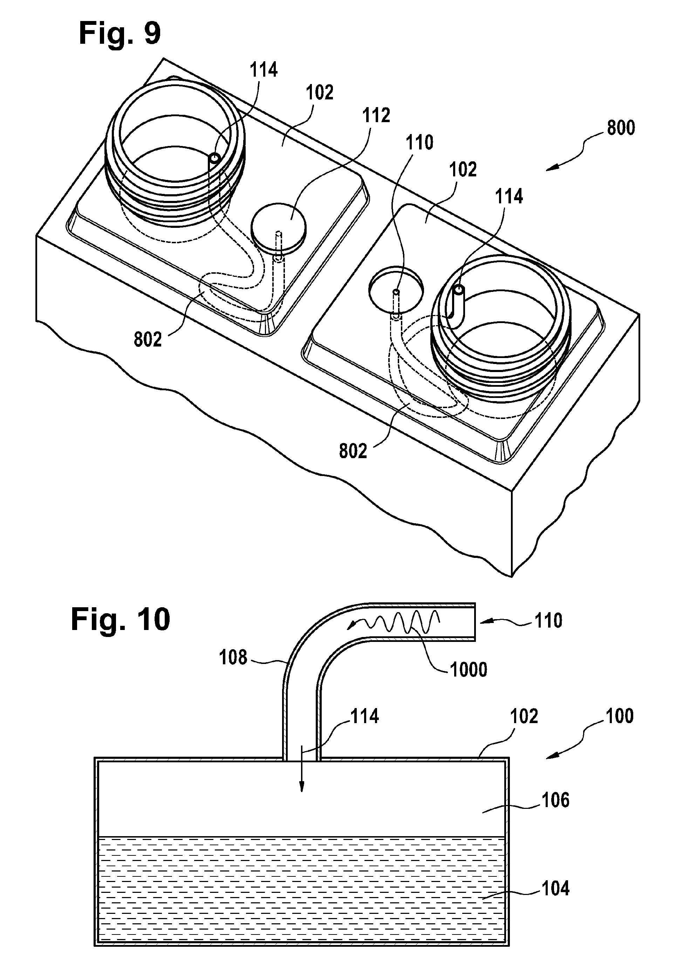

Figs. 8 and 9 illustrate a cartridge 800 according to a further embodiment of the invention. In Figs. 8 and 9 two cartridges are integrated into a common housing. In this example there is a gas filter 112 mounted at the entrance to a tube 802. The tube is located within the reservoir chamber 102. The tube extends up to the top of threads upon which a cap 402 is mounted. In this embodiment the gas filter 112 prevents fluid from leaving the cartridge 102 and also external particles or liquids, e.g., dust particles or droplets of condensed water, from entering and clogging the tube 802. Fig. 9 shows an example of the gas filter 112 removed on one of the cartridges 800. The caps 402 are also removed in Fig. 9. It can be seen how the inlets 114 are positioned in the reservoir chamber 102 at the highest point. The gas filters 112 prevent fluid from exiting the reservoir chamber 102.

Fig. 10 shows another example of a cartridge 100. This example is used to discuss the diffusion of gas into the cartridge 100. The cartridge 100 comprises a reservoir chamber 102 that is partially filled with fluid 104 and gas 106. The baffle means in this figure is represented by a tube 108. The baffle means 108 has a vent-to-atmosphere 110 and an inlet 114 which enters the reservoir chamber 102 in the gas filled region 106. The line marked 1000 represents a gas molecule diffusing through the baffle means 108 to the inlet 114.

The cartridge shown in Fig. 10 has both a gas and a liquid inside the reservoir chamber 102. Outside of the chamber are atmospheric conditions. These two regions are separated by a tube. The liquid in the cartridge can be progressively degraded by a molecules in the atmospheric gases. These molecules move from the surrounding environment to the inside of the cartridge by diffusion.

Calculations on how to define the tube diameter and length are detailed to demonstrate how to choose these parameters to prevent too fast destruction of the chemical properties of the liquid.

Basically the longer and the thinner the tube 108, the slower is the diffusion of the molecule 1000 inside the cartridge. A general parameter, herein referred to as the impedance, is defined and which is used to perform calculations which assure than the cartridge will be usable during a certain time if it is kept open in the same environment. Z is defined as the ratio between the concentration difference of the molecule 1000 across the channel and the molecule flux multiplied by the diffusion constant D of molecule 1000 diffusing in the cartridge.

This impedance can be easily calculated for long and round tube, and is used as reference.

In order to make such calculations it is necessary to define or determine the conditions under which the liquid is no more usable due to the contamination or degradation by molecule from the environment. There is therefore a quantity, Ncrit, which express the critical number of molecule 1000 which have diffused inside the reservoir. This quantity depends highly on several parameters such as on solubility, and on different chemical reaction parameters, such as, temperature or pressure.

Important variables to define, concentrations are in molecule/$m^3$:

- t_life : wished duration time of the reservoir
- C_0: concentration of this molecule in surrounding environment
- N_crit: critical number of particles inside the cartridge which should never be attained during the time t_life.
- V_cart: Total volume of the cartridge
- V_gas: Volume of gas in the cartridge
- C_gas_0: initial concentration of the molecule in the gas part of the reservoir.
- D: is the diffusion constant of the molecule at the considered conditions
- Z : geometry inductance
- For round and long homogenous tube

  o L: length
  o S: cross-section surface ( $= \pi R^2$)

Z is defined as the ratio between the concentration difference across the channel and the molecule flux multiplied by the diffusion constant D.

For a simple round and long geometry, the maximum molecule flow from the outside to the inside can be defined in the steady-state approximation:

$$\varphi_{max} = \frac{SD}{L}(C_0 - C_{gas\_0}) \quad \text{(molecule/s)}$$

Therefore, by a simple integration, the maximum number of molecules in the cartridge at a time t, which have diffused inside:

$$Nmax(t) = \frac{SD}{L}(C_0 - C_{gas_0}) * t \quad \text{(molecule)}$$

Then we can deduce that we need this inequality:

$$N_{crit} \geq N_{max}(t_{life}) = \frac{SD}{L}(C_0 - C_{gas_0}) * t_{life}$$

In a more general way:

$$Ncrit \geq N_{max}(t_{life}) \geq \frac{D}{Z}(C_0 - C_{gas_0}) * t_{life}$$

To ensure with certitude a lifetime greater than t for the liquid inside the reservoir, the impedance Z has to respect this formula

$$Z > D\frac{(C_0 - C_{gas\_0})t_{life}}{N_{crit}} = Zcrit$$

As written before, in the special case where the tubing is homogeneously round, Z can be defined by:

$$Z = \frac{L}{S}$$

Thus (for circular tubing):

$$\frac{L}{S} > D\frac{(C_0 - C_{gas\_0})t_{life}}{N_{crit}}$$

As long as the impedance Z of the tube is greater than Zcrit, the duration of the liquid and the cartridge is preserved for a minimal time t.

### Example: $CO_2$ in water

- D = 0.16e-4 $m^2$/s
- V_cart = 30ml = 30e-6 $m^3$
- T_life = 1 year = 365.25*24*3600 s
- $pCO_2$ = 4e-4*101325 (partial pressure of $CO_2$ in air)

- N_crit = N_crit_gas+N_crit_liq

  ○ N_crit _gas = Vgas*(Na*pCO$_2$)/(R*T)

  ■ With Na = Avogadro constant, R = perfect gas constant and T = temperature.

  ○ N_crit_liq = Vliq*MaxConCO$_2$

  ■ This value is taken to be around 120mg/l, which is a lot more than for the N_crit_gas

The critical number of $CO_2$ molecules in gas is attained when the partial pressure in the gas volume is attained and $CO_2$ molecules are saturated in water (approx. double the number needed to saturate gas).

- **For one year stability:**

  o Vliq = 29ml
  L = 100cm and D= 3.2mm
  L = 10cm and D = 1mm

  o Vliq = 15ml
  L = 100cm and D= 2.3mm
  L = 10cm and D = 726$\mu$m

  o Vliq = 1ml
  L = 100cm and D= 650$\mu$m
  L = 10cm and D = 205$\mu$m

Vliq is the volume of the liquid or fluid in the reservoir chamber. If length and diameter values of the tube are chosen so that the impedance is above these values then the cartridge will have the desired life time of one year. For instance, in one embodiment the baffle means comprises a tube with a length greater than or equal to 10 cm with a diameter equal to or less than 1mm. For a tube of 10cm in length with a diameter of 1 mm, Z = 1.24e5 m$^{-1}$. In one embodiment of the invention the impedance, as defined above, of the baffle means is less than or equal to 1. 24e5 m$^{-1}$. In this embodiment the fluid may be a creatinine test reagent.

Similarly, for 15mf of liquid in the reservoir chamber, with 1ml of gas in the cartridge, and considering CO2 diffusion, the length of the tube should be at least 10 cm with a diameter of less than or equal to 726$\mu$m. In one embodiment of the invention the impedance, as defined above, of the baffle means is less than or equal to Z = 12.42e5 m$^{-1}$. In this embodiment the fluid may be a creatinine test reagent.

**List of reference numerals**

| | |
|---|---|
| 100 | cartridge |
| 102 | reservoir chamber |
| 104 | fluid |
| 100 | gas |
| 108 | baffle means |
| 110 | vent to atmosphere |
| 112 | gas filter |
| 114 | inlet |
| 116 | outlet |
| 118 | dispenser |
| 200 | automatic analyzer |
| 202 | cartridge |
| 202' | cartridge |
| 202" | cartridge |
| 204 | actuator assembly |
| 204' | actuator assembly |

| 204" | actuator assembly |
|------|-------------------|
| 206 | sample holder |
| 208 | biological sample |
| 210 | relative movement means |
| 212 | relative movement |
| 214 | measurement system |
| 220 | computer |
| 222 | hardware interface |
| 224 | processor |
| 226 | user interface |
| 228 | computer storage |
| 230 | computer memory |
| 232 | analysis request |
| 234 | sensor data |
| 236 | analysis result |
| 240 | control module |
| 400 | cartridge |
| 402 | cap |
| 404 | thread |
| 406 | channel in thread |
| 500 | gas filter location |
| 600 | cartridge |
| 602 | tube |
| 800 | cartridge |
| 802 | tube |
| 1000 | path of diffusion |

**Claims**

1. A cartridge (100, 202, 202', 202", 400, 600, 800) for dispensing a fluid (104), wherein the cartridge comprises:

   - a reservoir chamber (102) operable for receiving the fluid and for receiving a ventilation gas (106), wherein the reservoir chamber comprises an inlet (114) for receiving the ventilation gas and an outlet (116) for dispensing the fluid, wherein at least a portion (106) of the reservoir chamber is operable for being filled with the ventilation gas when in an operating position, wherein the inlet is located in the portion operable for being filled with the ventilation gas, wherein the fluid comprises a reagent; and
   - a baffle means (108, 406, 602, 802) for restricting gas diffusion through the inlet, wherein the reservoir chamber is operable for receiving the ventilation gas via the baffle means.

2. The cartridge of claim 1, wherein the cartridge comprises a cap (402) for sealing the inlet, and wherein the cartridge is operable for forming at least a portion of the baffle means when the cap is opened.

3. The cartridge of claim 2, wherein the cartridge comprises threads for attaching the cap, and wherein the baffle means comprises a diffusion path formed in the threads.

4. The cartridge of claim 3, wherein the diffusion path comprises a channel (406) in the threads, and wherein the cartridge further comprises a cap restraint for limiting the opening of the cap a predetermined amount.

5. The cartridge of claim 1, wherein the baffle means is at least partially formed on an exterior surface of the cartridge.

6. The cartridge of claim 5, wherein the baffle means comprises a tube (602) mounted on the exterior surface.

7. The cartridge of claim 1, wherein the baffle means is at least partially formed within the reservoir chamber.

8. The cartridge of claim 7, wherein the baffle means comprises a tube (802) located at least partially within the reservoir chamber.

9. The cartridge of any one of the preceding claims, wherein at least a part of the cartridge is injection molded, and wherein the baffle means is formed at least partially by the part.

10. The cartridge of any one of the preceding claims, wherein the baffle means comprises a gas filter (112, 500).

11. The cartridge of any one of the preceding claims, wherein the cartridge further comprises the fluid.

12. The cartridge of any one of the preceding claims, wherein the fluid comprises any one of the following: a blood grouping reagent, a solvent, a diluent, a catalyst, an antibody, an enzyme, a recombinant protein, a virus isolate, a virus, a biological reagent, a protein, a salt, a detergent, a nucleic acid, an acid, a base, a dispersion, latex particles, nano particles, magnetic particles, and combinations thereof.

13. The cartridge of any one of the preceding claims, wherein the cartridge further comprises a dispenser (118) for dispensing the fluid, wherein the dispenser is operable for receiving the fluid from the outlet.

14. An automatic analyzer (200) for analyzing a biological sample, wherein the automatic analyzer is operable for holding a cartridge according to claim 13, wherein the automatic analyzer is operable for holding the cartridge in the operating position, wherein the automatic analyzer comprises an actuator assembly (204, 204', 204") operable for actuating the dispenser, and wherein the automatic analyzer further comprises a controller (220) for controlling the operation of the actuator assembly.

15. A method of dispensing fluid with an automatic analyzer, wherein the method comprises the steps of:

- providing (300) a cartridge (100, 202, 202', 202", 400, 600, 800), wherein the cartridge comprises a reservoir chamber (102), wherein the reservoir chamber is filled with the fluid (104), wherein the fluid comprises a reagent, wherein the reservoir chamber comprises an inlet (114) for receiving a ventilation gas and an outlet (116) for dispensing the fluid, wherein the cartridge further comprises a baffle means (108) for restricting gas diffusion through the inlet, wherein the cartridge further comprises a dispenser (118) for dispensing the fluid;
- installing (302) the cartridge into an automatic analyzer (200) in an operating position, wherein the automatic analyzer comprises an actuator assembly (204, 204', 204") for actuating the dispenser;
- receiving (304) the fluid from the outlet using the dispenser;
- operating (306) the actuator assembly to dispense the fluid;
- receiving (308) the ventilation gas via the baffle means at the inlet; and
- filling (310) at least a portion (102) of the reservoir chamber with the ventilation gas, wherein the inlet is located in the portion operable for being filled with the ventilation gas.

# Fig. 1

**Fig. 2**

# Fig. 3

```
┌─────────────────────────────────────────┐
│         Provide a cartridge             │──── 300
└─────────────────────────────────────────┘
                    │
                    ▼
┌─────────────────────────────────────────┐
│ Install the cartridge into an automatic analyzer │──── 302
│          in an operating position        │
└─────────────────────────────────────────┘
                    │
                    ▼
┌─────────────────────────────────────────┐
│  Receive fluid from outlet using the dispenser │──── 304
└─────────────────────────────────────────┘
                    │
                    ▼
┌─────────────────────────────────────────┐
│ Operate actuator assembly to dispense the fluid │──── 306
└─────────────────────────────────────────┘
                    │
                    ▼
┌─────────────────────────────────────────┐
│        Receive the ventilation gas       │──── 308
│        via the buffle means at the inlet │
└─────────────────────────────────────────┘
                    │
                    ▼
┌─────────────────────────────────────────┐
│ Fill at least a portion of the reservoir chamber │──── 310
│         with the ventilation gas         │
└─────────────────────────────────────────┘
```

Fig. 4

400

402

404

406

402

406

404

102

Fig. 5

500

402

400

114

404

406

110

102

**Fig. 6**

# Fig. 7

Fig. 8

# Fig. 9

# Fig. 10

Europäisches
Patentamt

European
Patent Office

Office européen
des brevets

**EUROPEAN SEARCH REPORT**

Application Number

EP 12 16 7111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/015009 A1 (WALLACE MARK ANDREW [GB] ET AL) 21 January 2010 (2010-01-21) <br> * abstract * <br> * figure 2 * <br> * paragraphs [0001], [0014], [0019], [0020], [0037] - [0050], [0115] - [0118] * <br> ----- | 1,6,9, 11-15 | INV. <br> G01N35/10 <br> B01L3/52 |
| X | US 2011/303760 A1 (JOSHI ASHOK [US] ET AL) 15 December 2011 (2011-12-15) <br> * abstract * <br> * figures 1-4 * <br> * paragraphs [0007] - [0009], [0031], [0035], [0036] * <br> ----- | 1-10 | |
| X | US 5 078 970 A (TEODORESCU MIRCEA [US] ET AL) 7 January 1992 (1992-01-07) <br> * abstract * <br> * figure 2 * <br> * columns 1-4 * <br> ----- | 1,6,9 | |
| A | US 5 660 796 A (SHEEHY TIMOTHY M [US]) 26 August 1997 (1997-08-26) <br> * the whole document * <br> ----- | 1-15 | TECHNICAL FIELDS SEARCHED (IPC) <br><br> G01N <br> B01L |

The present search report has been drawn up for all claims

| Place of search | Date of completion of the search | Examiner |
|---|---|---|
| The Hague | 18 September 2012 | Seifter, Achim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 12 16 7111

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2012

| Patent document cited in search report | | Publication date | Patent family member(s) | | Publication date |
|---|---|---|---|---|---|
| US 2010015009 | A1 | 21-01-2010 | EP | 2059772 A2 | 20-05-2009 |
| | | | GB | 2437616 A | 31-10-2007 |
| | | | US | 2010015009 A1 | 21-01-2010 |
| | | | WO | 2007122387 A2 | 01-11-2007 |
| US 2011303760 | A1 | 15-12-2011 | US | 2011303760 A1 | 15-12-2011 |
| | | | WO | 2011155960 A1 | 15-12-2011 |
| US 5078970 | A | 07-01-1992 | US | 5078970 A | 07-01-1992 |
| | | | WO | 9200144 A1 | 09-01-1992 |
| US 5660796 | A | 26-08-1997 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1959257 A2
- WO 2007122387 A